# EUROPEAN PATENT SPECIFICATION

(11) **EP 2 576 195 B1**
(45) Date of publication and mention of the grant of the patent: **15.07.2015**
(21) Application number: 11724460.8
(22) Date of filing: 04.05.2011
(51) Int. Cl.: B29D 30/00

(54) **METHOD OF CONTROLLING THE MANAGEMENT OF FORMING DRUMS IN BUILDING TYRES FOR VEHICLE WHEELS AND PLANT FOR PRODUCTION OF TYRES FOR VEHICLE WHEELS**
VERFAHREN ZUR STEUERUNG VON AUFBAUTROMMELN BEI DER HERSTELLUNG VON REIFEN FÜR FAHRZEUGRÄDER UND ANLAGE ZUR HERSTELLUNG VON REIFEN FÜR FAHRZEUGRÄDER
PROCÉDÉ POUR COMMANDER LA GESTION DE TAMBOURS DE FABRICATION DANS LA PRODUCTION DE PNEUMATIQUES POUR ROUES DE VÉHICULES ET INSTALLATION POUR LA PRODUCTION DE PNEUMATIQUES POUR ROUES DE VÉHICULES

(30) Priority: 04.06.2010 US 351543 P; 28.05.2010 IT MI20100967
(43) Date of publication of application: 10.04.2013
(73) Proprietor: Pirelli Tyre S.p.A., 20126 Milano (IT)
(72) Inventor: MARCHINI, Maurizio, 20126 Milano (IT); MANCINI, Gianni, 20126 Milano (IT); BALLABIO, Michele, 20126 Milano (IT)
(74) Representative: Tansini, Elio Fabrizio
(86) International application number: PCT/IB2011/051969
(87) International publication number: WO 2011/148283

(56) References cited:
- WO-A1-2009/068939
- US-A- 5 540 803
- US-A1- 2002 189 744
- US-A1- 2006 219 348

## Description

The present invention relates to a method of controlling the management of forming drums in building tyres for vehicle wheels and to a plant for production of tyres for vehicle wheels.

A tyre generally comprises a carcass structure including at least one carcass ply having end flaps in engagement with respective annular anchoring structures, usually each formed with at least one substantially circumferential annular insert onto which at least one filling insert is applied. A belt structure comprising one or more belt layers put in radially superposed relationship with each other and with the carcass ply is associated with the carcass structure at a radially external position thereof, said belt layers having textile or metallic reinforcing cords disposed in a crossed orientation and/or substantially parallel to the circumferential extension direction of the tyre. A tread band made of elastomeric material too like other semifinished products constituting the tyre, is applied at a radially external position to the belt structure. A so-called "under-layer" of elastomeric material having properties suitable to ensure a steady union of the tread band can be interposed between said tread band and the belt structure. In addition, respective sidewalls of elastomeric material are applied onto the side surfaces of the carcass structure, each extending from one of the side edges of the tread band until close to the respective annular anchoring structure to the beads.

It should be pointed out, to the aims of the present specification, that the term "elastomeric material" is understood as indicating a composition comprising at least one elastomeric polymer and at least one reinforcing filler. Preferably, this composition further comprises additives such as a cross-linking agent and/or a plasticizer, for example. Due to the presence of the cross-linking agent, this material can be cross-linked through heating, so as to form the final article of manufacture.

As known, manufacture of the tyre components presently takes place through deposition of one or more elementary semifinished products directly on one or more supports.

It will be understood that by "tyre component" in this context it is intended any functional component of the tyre (e.g. under-liner, liner, carcass ply/plies, fillers in the bead region, belt layer/s, sidewalls, sidewall inserts in run flat tyres, abrasion-proof inserts, under-layer, tread band, textile or metallic reinforcing elements, reinforcing elements of elastomeric material).

It is to be noted that by "elementary semifinished product" of the tyre in this context it is intended an elongated element (supplied both in a circumferential and in a transverse direction either from a reel, or from an extruder, or formed in any way for use) made of elastomeric material alone or comprising further structural elements such as at least one textile or metallic reinforcing cord, or at least two cords preferably parallel to each other, each cord preferably extending in the longitudinal direction of the aforesaid elongated element.

This elongated element, cut to size for deposition in a substantially transverse direction (forming an important angle relative to the circumferential direction of a forming drum) in the present specification is briefly referred to as "strip-like element".

Preferably, said elementary semifinished product has a transverse dimension in the range of about 1 mm to about 80 mm.

More preferably, said elementary semifinished product has a transverse dimension included between about 2 mm and about 50 mm.

In the present specification and in the following claims, by "cycle time" in plants provided with at least one building line having a succession or sequence of work stations, it is intended the inverse of the entry (exit) frequency of the successive forming drums into (from) said building line.

Document US 2002/0189744 - A discloses a plant for producing tyres which are different from each other, the plant comprising a plurality of work stations each comprising at least a processing unit.

This document also discloses the sequence of steps for producing a green tyre in which the toroidal supports are transferred from a processing unit to a subsequent processing unit.

At each processing unit a specific tyre component or part of the same is formed, different from the tyre component or part of the same formed in another processing unit.

Document US 5540803 - A discloses a tyre building system comprising a band drum, a shaping drum, and a belt forming machine having two oscillating or rotating belt drums, in which the band drum and the shaping drum are arranged on the same axis in opposing relationship.

A band transfer is disposed there-between on the axis in such a manner as to reciprocate.

Document WO 2009/157028, in the name of the same Applicant, discloses a plant for building tyres for vehicle wheels. The plant comprises a building line which in turn comprises a plurality of work stations disposed in sequential series. Each work station is adapted to build at least one structural component of the tyre through assembly of at least one elementary semifinished product. The building line comprises at least one device for handling the tyre being processed on a respective forming support associated with each work station and at least one transfer device adapted to transfer the tyre being processed on its own forming support from a first work station to a second work station that is not adjacent to the first one.

In document WO 2009/068939, in the name of the same Applicant, a carcass ply is built on a forming drum by application of a plurality of strip-like elements obtained through rotation of the forming drum around a geometric rotation axis thereof and application of pairs of strip-like elements by means of a first deposition unit and a second deposition unit placed close to opposite portions of the forming drum.

The Applicant could notice that in plants of the above type as described in the aforesaid documents, the drums or supports are transferred from a work station to a subsequent work station and that at each work station a tyre component or part of the same is formed, directly on the drum or support, through deposition of one or more of said elementary semifinished products.

The Applicant has however verified that the frequency at which the individual drums or supports are moved between one station and the station coming after it in time is determined by the longest deposition time. The overall time for manufacturing each tyre is therefore heavily affected by the time spent for laying the elementary semifinished product or products into the slowest of the work stations in time sequence designed for building the tyre.

The Applicant has ascertained that if the deposition operations are divided among several sequential work stations in order to reduce the deposition time in a work station, said operations have to be stopped for unloading the drum or support from one work station and loading it onto the following station, thus increasing the downtime which is useless for deposition.

The Applicant has further verified that if the deposition speed on the individual drum or support in a work station is increased in order to reduce the deposition time in such a work station, the speed increase is to the detriment of the deposition accuracy and the quality of the produced tyre.

The Applicant has perceived the possibility of increasing productivity in said plants by reducing the overall tyre building time, while at the same time increasing reliability of the building processes and quality of the produced tyres, by modifying the management of the forming drums at the entrance of those work stations that are critical for containment of the cycle time, i.e. those having the longest deposition time.

In particular, the Applicant has perceived that a production plant can be organised by functional assemblies or areas in which each assembly is adapted to form a tyre component, said assemblies comprising at least two work stations and two or more forming drums associated and coordinated with these stations according to predetermined production cycles. More specifically, the Applicant has selected those production steps in which the corresponding work stations, due to complexity of the operations, appeared to be the slowest inside their own building line in the plant and has dedicated to each of these steps, a functional assembly capable of obtaining that particular component building it in parallel on different forming drums each placed in different work stations.

The Applicant has then found that, by creating at least one assembly of at least two work stations within at least one building line of a tyre production plant in which each station of the assembly builds the same tyre component (by deposition of elementary semifinished products on a forming drum) in parallel with the other work station or stations of the assembly with a phase displacement corresponding to the cycle time of the building line they belong to, it is possible to maintain said cycle time within the aforesaid building line of the plant.

More particularly, the Applicant has found that it is possible to sequentially feed the drums coming from the line upstream of the assembly or area formed with said at least two work stations, in an alternated manner to a work station and to the other and with a frequency corresponding to the cycle time (i.e. equal to the inverse thereof). It is also possible to feed these forming drums coming out of said area to the downstream line at the same frequency, corresponding to the cycle time, and increase the true useful deposition time in each of said work stations of such an assembly.

More specifically, in a first aspect, the present invention relates to a method of controlling the management of forming drums in building tyres for vehicle wheels as defined in claim 1, the method comprising:
- feeding "n" forming drums one after the other in a building line having a succession of work stations, for each time interval equal to one cycle time, said building line comprising: at least one assembly of "m" work stations each adapted to form the same component of the tyre;
wherein "m" distinct forming drums are respectively brought to and moved apart from the different distinct "m" work stations of said assembly; wherein each of said "m" work stations receives and releases a forming drum at each time interval equal to a multiple of "m" of said cycle time;
wherein "m" is greater than or equal to 2 and "n" is greater than or equal to "m".

The Applicant has verified that by using the above stated management, by increasing the work stations dedicated to building of tyre components requiring a greater length and generating a flow of forming drums minimising the waste of time for loading and unloading said drums inside said work stations, a reliable production under the qualitative and quantitative point of view is obtained because deposition accuracy of the tyre component and cycle time are in compliance with the design values.

More specifically, in a different aspect, the present invention relates to a plant for production of tyres for vehicle wheels as defined in claim 18, the plant comprising:
- at least one building line having a succession of work stations comprising at least one assembly of "m" work stations, each adapted to form the same tyre component;
- devices for feeding and picking up "n" forming drums, one at a time, to and from said building line at each time interval equal to a cycle time;
- transfer devices for respectively bringing and moving apart "m" distinct forming drums to and from "m" distinct work stations of said assembly;
wherein each of said "m" work stations respectively receives and releases a forming drum at each time interval equal to a multiple of "m" of said cycle time; wherein "m" is greater than or equal to 2 and "n" is greater than or equal to "m". Preferred embodiments of the invention are defined in the dependent claims.

The present invention, in at least one of the aforesaid aspects, can further have one or more of the preferred features hereinafter described.

The partly assembled tyres coming out of the assembly formed with the "m" work stations have all together reached the same building stage.

Preferably, the method comprises: picking up said "n" forming drums one after the other from the building line at each time interval equal to said cycle time.

Preferably, a deposition of an elementary semifinished product in a first work station and the deposition of the same elementary semifinished product in an m-th work station of said assembly are out of phase by said cycle time (Tc) multiplied by "m-1".

Preferably, given a minimum useful time "Tum" for the full deposition of an elementary semifinished product, given a moving-close time "Tav" of one of said "m" forming drums to one of said "m" work stations, given a moving-apart time "Tal" of said forming drum from the aforesaid work station and given the cycle time "Tc", the "m" number of work stations is equal to the ratio "(Tum+Tav+Tal)/Tc" rounded off to the higher integer.

Preferably, the elementary semifinished products laid down in the "m" work stations are the same.

According to an embodiment, each of the elementary semifinished products laid down in the "m" work stations comprises a plurality of strip-like elements disposed in circumferential side by side relationship on the forming drum.

Deposition of the strip-like elements is utilised in a carcass-building line for manufacture of the carcass ply/plies and/or in an outer-sleeve building line for manufacture of one or more belt layers through deposition of said strip-like elements in mutually approached relationship according to the circumferential extension of the forming drum.

Preferably, in the respective work station the strip-like elements are applied from bottom to top on the forming drum.

Deposition of each strip-like element from bottom to top prevents opposite flaps of said strip-like element projecting from the laying groups of the deposition head supporting it from bending under their own weight and sticking (which would happen should the strip-like element be brought to the drum from top to bottom) to the forming drum or the elements already laid down thereon before the true deposition, thereby causing interference between the laying groups and the bent flaps on mutual moving apart of the groups themselves.

In accordance with an alternative embodiment, each of the elementary semifinished products laid down in the "m" work stations comprises an elongated element wound up into coils around the forming drum.

The elongated element is for example used for building the tread band in the outer-sleeve building line through winding of said elongated element into coils disposed in side by side relationship and/or at least partly radially superposed on the forming drum.

Preferably, during deposition, the forming drums are in engagement on supports belonging to the work stations.

The work stations have supports of their own that are able to bear the drum during deposition of the elementary semifinished products and are independent of the devices moving the drums along the line.

Preferably, the forming drums are brought to the "m" work stations or moved away from the "m" work stations by at least one robot arm.

According to an embodiment, during deposition of an elementary semifinished product, the forming drums are supported by said at least one robot arm.

The robot arms therefore support the drums both during transfers and during deposition in the work stations.

According to an embodiment preferably designed for building of the carcass ply or plies, the method comprises: bringing the forming drums in an alternated manner to a first work station or a second work station by means of one and the same robot arm.

Preferably, while said robot arm brings one of the forming drums onto a support of the first work station or onto a support of the second work station, an unloading device mounted on board the work station receiving the forming drum carried by said robot arm moves away a forming drum already present in said work station.

Preferably, the method comprises: picking-up the forming drums in an alternated manner from the unloading device of the first work station or from the unloading device of the second work station through the one and the same robot arm.

Due to the presence of the unloading devices a single robot arm can be used and the plant costs can be reduced.

Preferably, for deposition of the belt layers for example, the method comprises: bringing the forming drums in an alternated manner to a first work station or a first transit location through a first robot arm.

Preferably, the method comprises: bringing the forming drums in an alternated manner from the first transit location to a second work station or from the first work station to a second transit location through a second robot arm.

Preferably, the method comprises: moving away the forming drums in an alternated manner from the second transit location or the second work station through a third robot arm.

Preferably, for deposition of the tread band for example, the method comprises: bringing the forming drums to a first work station or moving the forming drums away from said first work station through a first robot arm.

Preferably, the method comprises: laying on a trolley, the forming drums moved away from the first work station through the first robot arm and moving the trolley away from said first robot arm.

Preferably, the method comprises: bringing the forming drums to a second work station or moving said forming drums away from the second work station through a second robot arm.

In addition, the method comprises: moving a trolley close to the second robot arm and picking up from the trolley the forming drum to be brought to the second work station through said second robot arm.

Preferably, in a first embodiment of the plant designed for building of the carcass ply or plies, each work station comprises a support for carrying a forming drum rotatably around its geometric axis, devices for setting the forming drum in rotation around said geometric axis and at least one deposition head for laying strip-like elements, which head is operatively active on the forming drum.

Preferably, each work station comprises a single deposition head.

Preferably, the deposition head is positioned under the support for applying the strip-like elements from bottom to top on the forming drum.

Preferably, each work station comprises an unloading device that is movable between a position close to the support for engaging and picking up a forming drum supported by said support and a position spaced apart from said support for moving the forming drum away from said support.

Preferably, the transfer devices comprise a single robot arm operatively acting on all the work stations.

Preferably, in a second embodiment of the plant intended for building of the tread band, each work station comprises at least one unit for feeding a continuous elongated element of elastomeric material.

Preferably, the transfer devices comprise as many robot arms as the work stations and each of said robot arms is operatively active on a respective work station.

Preferably, the transfer devices comprise at least one trolley that is movable between the robot arms.

Preferably, in a variant of the first embodiment of the plant intended for building of the belt layer or layers, said support is movable between a work position close to the deposition head and an unloading position spaced apart from said deposition head.

Preferably, the transfer devices comprise as many robot arms as the work stations plus one, and transit locations, each interposed between a robot arm and the following one.

Preferably, the plant comprises devices for picking up the "n" forming drums, one at a time, from said building line at each time interval equal to said cycle time.

Preferably, said plant comprises two building lines: a carcass-building line and an outer-sleeve building line.

More preferably, each of said two building lines comprises at least one of said assemblies of "m" work stations.

According to a further preferred embodiment, said carcass-building line comprises one of said assemblies of "m" work stations dedicated to building of at least one carcass ply.

According to a different preferred embodiment, said outer-sleeve building line comprises an assembly dedicated to building of a belt structure.

According to another different preferred embodiment, said outer-sleeve building line comprises an assembly dedicated to building of a tread band.

It is the Applicant's opinion that a plant for tyre production according to the present invention which includes at least two building lines, briefly identified as carcass-building line and outer-sleeve building line respectively, each of which comprises at least one of said functional assemblies, is able to maintain said time cycle within each building line for any building operation of any tyre component manufactured in the aforesaid functional assembly.

Further features and advantages will become more apparent from the detailed description of a preferred but not exclusive embodiment of a method of controlling the management of forming drums in building tyres for vehicle wheels and of a plant for production of tyres for vehicle wheels in accordance with the present invention.

This description will be set out hereinafter with reference to the accompanying drawings, given by way of non-limiting example, in which:
- Fig. 1 is a diagrammatic top view of a plant for building tyres for vehicle wheels;
- Fig. 2 is a diagrammatic top view of an assembly of work stations belonging to the plant shown in Fig. 1;
- Fig. 3 shows an enlarged side elevation view of a work station of the assembly seen in Fig. 2;
- Fig. 4 is a diagrammatic top view of a different assembly of work stations belonging to the plant seen in Fig. 1;
- Fig. 5 is a diagrammatic top view of a further different assembly of work stations belonging to the plant in Fig. 1;
- Fig. 6 shows an half-section of a tyre for vehicle wheels made in accordance with the method of the invention.

With reference to the drawings, a plant for building tyres for vehicle wheels according to the present invention has been generally identified with reference numeral 1.

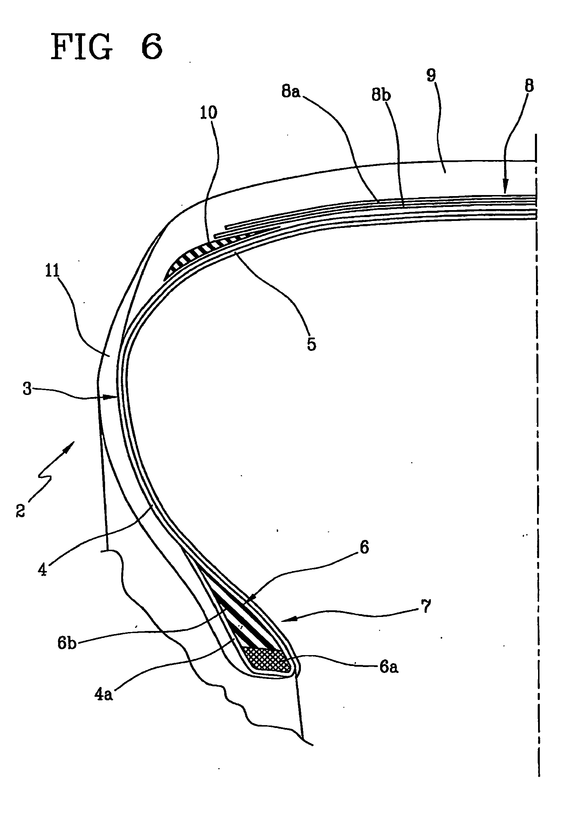

Plant 1 is intended for production of tyres 2 essentially comprising (Fig. 6) a carcass structure 3 having at least one carcass ply 4. A layer of airtight elastomeric material or so-called "liner" 5 can be applied to the inside of the carcass ply/plies 4. Two annular anchoring structures 6 each including a so-called "bead core" 6a carrying an elastomeric filler 6b at a radially external position, are in engagement with respective end flaps 4a of the carcass ply or plies 4. The annular anchoring structures 6 are integrated in the vicinity of regions usually identified as "beads" 7, at which usually engagement between tyre 2 and a respective mounting rim occurs. A belt structure 8 comprising one or more belt layers 8a, 8b is circumferentially applied around the carcass ply/plies 4 and a tread band 9 circumferentially overlaps the belt structure 8. So-called "under-belt inserts" 10 can be associated with the belt structure 8 and they are each placed between the carcass ply/plies 4 and one of the axially opposite end edges of the belt structure 8. Additionally or as an alternative to the under-belt inserts 10, annular inserts (not shown) of elastomeric material and/or including textile or metallic cords that are substantially parallel to the circumferential extension direction of the tyre (0-degree belt layer) or other reinforcing elements can be radially superposed at least on the axially opposite end edges of the belt layers 8a, 8b and/or interposed between said belt layers 8a, 8b, at least at said end edges. Two sidewalls 11, each extending from the corresponding bead 7 to a corresponding side edge of the thread band 9, are applied at laterally opposite positions to the carcass ply/plies 4.

Said components of tyre 2 are made on one or more forming drums by moving said forming drums between different work stations at each of which suitable devices, such as deposition heads for example, preferably apply elementary semifinished products onto the forming drum/drums.

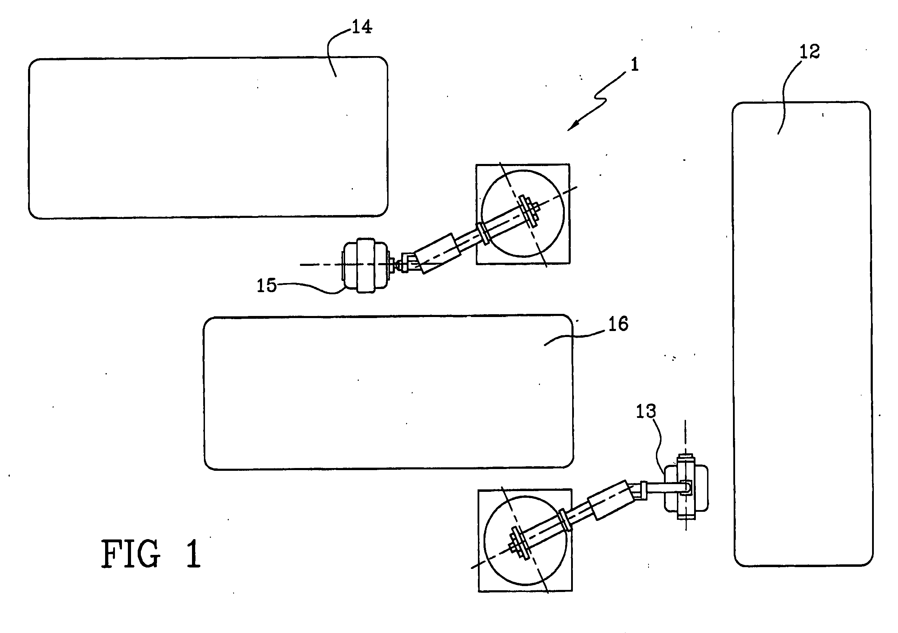

In a preferred embodiment, diagrammatically shown by way of example in Fig. 1, plant 1 comprises a carcass-building line 12, at which one or more forming drums 13 are sequentially moved between different work stations designed to form a carcass sleeve on each forming drum 13, which carcass sleeve comprises the carcass ply or plies 4, liner 5, the annular anchoring structures 6 and possibly at least part of the sidewalls 11. Simultaneously, in an outer-sleeve building line 14, one or more auxiliary forming drums 15 are sequentially moved between different work stations designed to form an outer sleeve on each auxiliary drum 15, which outer sleeve comprises at least the belt structure 8, tread band 9, and possibly at least part of the sidewalls 11.

Plant 1 further comprises an assembling station 16 at which the outer sleeve is removed from the auxiliary drum 15 to be coupled to the carcass sleeve.

Tyres 1 built by means of plant 1 are sequentially transferred to at least one vulcanisation unit, not shown.

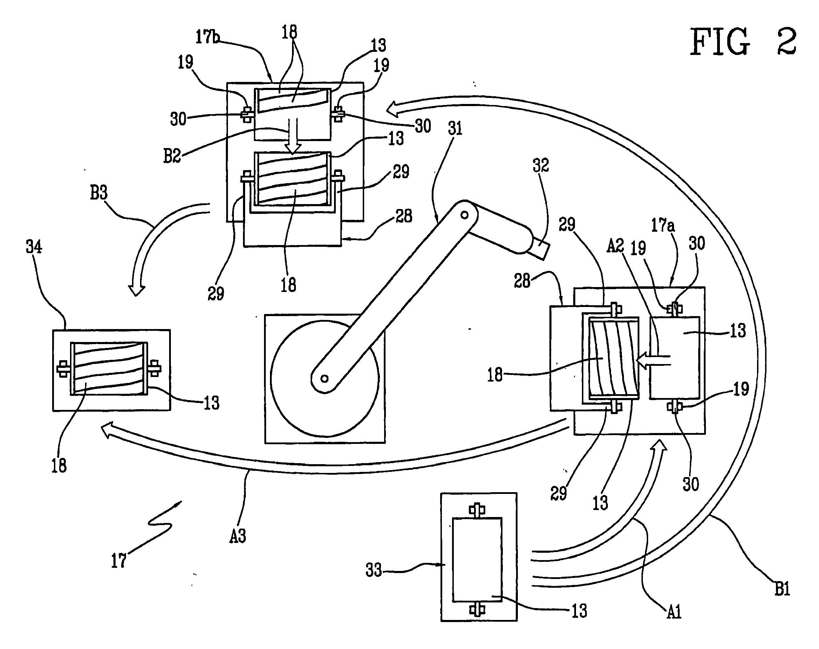

Fig. 2 diagrammatically shows an assembly 17 of "m" work stations (with m=2) or areas, belonging to the carcass-building line 12. Assembly 17 as shown is formed with a first work station 17a and a second work station 17b intended for deposition of the carcass plies 4 on the forming drums 13. Each carcass ply 4 is made by building devices designed to apply a plurality of strip-like elements 18 in mutual circumferential contact relationship on the forming drum 13, so as to form at least one ply layer having a continuous circumferential extension around the geometric axis "X-X" of said forming drum 13.

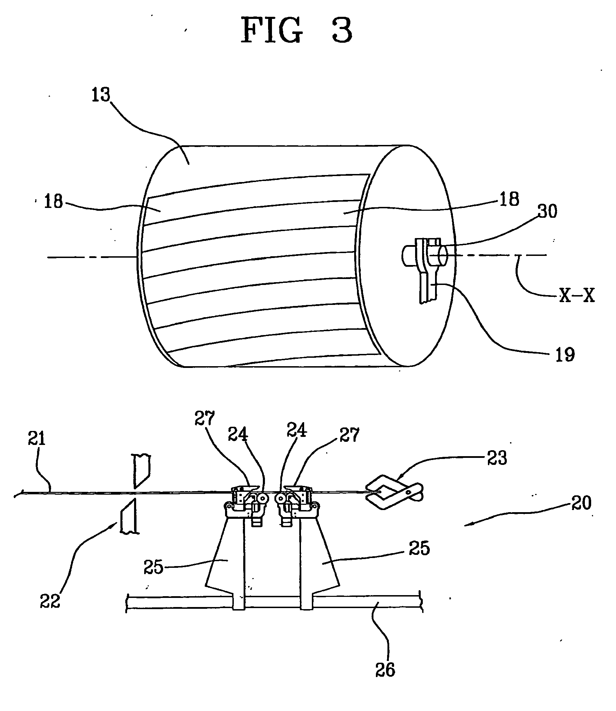

Each work station 17a, 17b comprises a support 19 diagrammatically shown in Figs. 2 and 3, designed to carry a forming drum 13 enabling rotation of said drum around its geometric axis "X-X". Devices not shown and being part of the work station 17a, 17b, in the form of a chuck moved by a motor for example, are used to set the forming drum 13 in rotation around said geometric axis "X-X".

A single deposition head 20 is mounted on each work station 17a, 17b under the forming drum 13 carried by support 19 and is adapted to apply the strip-like elements 18 from bottom to top onto said forming drum 13 during rotation of the latter (Fig. 3).

The strip-like elements 18 are obtained by cutting operations sequentially carried out on an elongated or ribbon element 21 coming from a straining and/or calendering device, or from a feeding reel. A cutting member 22 is designed to cut the elongated element 21 at right angles or according to a predetermined inclination to the longitudinal extension of same, so as to obtain the individual strip-like elements 18. Combined with the cutting member is at least one grip member 23 movable between a first work position at which it is adapted to engage a final end of the elongated element 21 in the vicinity of the cutting member 22, and a second work position at which it is moved away from the cutting member 22. Following translation from the first to the second work positions, the grip member 23 drags along the elongated element 21 so as to extend it beyond the cutting member 22 and preferably in a radially approached position relative to the forming drum 13, over a stretch of the same length as that of the strip-like element 13 to be obtained following the subsequent actuation of the cutting member 22 itself. The deposition head 20 lends itself to sequentially engage each of the strip-like elements 13 prepared in the above described manner, to cause application of same onto a radially external deposition surface exhibited by the forming drum 13. In the embodiment shown, the deposition head 20 comprises two presser elements 24 each carried by a support element 25 movable along a guide structure 26 upon the action of transverse-movement devices, not shown as they can be made in any manner convenient for a person skilled in the art. In addition, preferably in engagement with each support element 25 is at least one auxiliary retaining element 27 cooperating with the respective presser element 24 for retaining the strip-like element 18 during the instants intervening between cutting of said strip-like element upon the action of the cutting unit 22, and application of same onto the forming drum 13.

Associated with the deposition head 20 are radial-movement devices, not shown, designed to translate the presser elements 24 to a radially approached position relative to the radially external surface of the forming drum 13. Further provided are transverse-movement devices also not shown, for instance operating between the guide structure 26 and the support elements 25 for translation of the presser elements 24 between a first operating condition at which they are in mutual approach and a second operating condition at which they are spaced apart relative to a transverse symmetry plane of the forming drum 13.

Each work station 17a, 17b further comprises an unloading device 28 (Fig. 2) which is movable between a first and a second position. In the first position, not shown, the unloading device 28 is close to the support 19 and is able to engage the forming drum 13 carried by the support 19 itself and pick it up from said support 19. In the non-limiting example herein illustrated, the unloading device 28 comprises two arms 29 having final ends capable of engaging two spindles 30 extending along the geometric axis "X-X" of the forming drum 13 and integral with opposite bases of the drum 13 itself. In the second position, shown in Fig. 2, the unloading device 28 is spaced apart from support 19 to such an extent that it does not interfere with another drum 13 loaded on support 19.

Transfer devices defined by a robot arm 31 are positioned in the vicinity of the two work stations 17a, 17b. The robot arm 31 has a gripping end 32 capable of reaching the supports 19 and the unloading devices 28 of both said work stations 17a, 17b, for picking up the forming drums 13 from the unloading devices 28 or laying the forming drums 13 on the supports 19, as explained in detail in the following.

A loading location 33 is positioned at the first work station 17a and an unloading location 34 is positioned at the second work station 17b, and both of them can be reached by the robot arm 31.

In use, in accordance with the method of the invention, a first forming drum 13 coming from a portion of the carcass-building line 12 placed upstream of the assembly made up of the first and second work stations 17a, 17b, is positioned in the loading location 33 by devices not shown.

The first forming drum 13 is picked up by the robot arm 31 and positioned on the support 19 of the first work station 17a (arrow A1), where the deposition head 20 of the respective work station 17a starts laying the strip-like elements 18 of the carcass ply/plies 4 of the first tyre 2.

A second forming drum 13 is positioned in the loading location 33 left free by the first forming drum 13.

The robot arm 31 that meanwhile has left the first drum 13 in said first work station 17a, picks up the second forming drum 13 from the loading location 33 and loads it onto the support 19 of the second work station 17b (arrow B1), where the deposition head 20 of the respective work station 17b starts laying the strip-like elements 18 of the carcass ply/plies 4 of a second tyre 2.

When deposition of the strip-like elements 18 in the first work station 17a has been completed, the unloading device 28 of said first work station 17a picks up the first forming drum 13 from support 19 and moves it away from the same (arrow A2). Meanwhile, the robot arm 31, that has picked up a third forming drum 13 arrived at the loading location 33, places said third forming drum 13 on support 19 of the first work station 17a where the deposition head 20 of the respective work station 17a starts laying the strip-like elements 18 of the carcass ply/plies 4 of a third tyre 2.

Subsequently, the robot arm 31 picks up the first forming drum 13 from the respective unloading device 28 and lays it down in the unloading station 34 (arrow A3) where devices, not shown, pick it up and bring it to a portion of the carcass-building line 12 placed downstream of the assembly made up of the first and second work stations 17a, 17b.

Meanwhile, deposition of the strip-like elements 18 in the second work station 17b is completed and the unloading device 28 of said second work station 17b picks up the second forming drum 12 from support 19 and moves it away therefrom (arrow B2). The robot arm 31 that has picked up a fourth forming drum 13 arrived at the loading location 33, places said fourth forming drum 13 on support 19 of the second work station 17b where the deposition head 20 of the respective work station 17b starts laying the strip-like elements 18 of the carcass ply/plies 4 of a fourth tyre 2.

Subsequently, the robot arm 31 picks up the second forming drum 13 from the respective unloading device 28 and lays it down in the unloading station 34 (arrow B3), where devices, not shown, pick it up and bring it to the portion of the carcass-building line 12 placed downstream of the assembly made up of the first and second work stations 17a, 17b.

The cycle is repeated for all forming drums 13 brought in succession to the loading location 33.

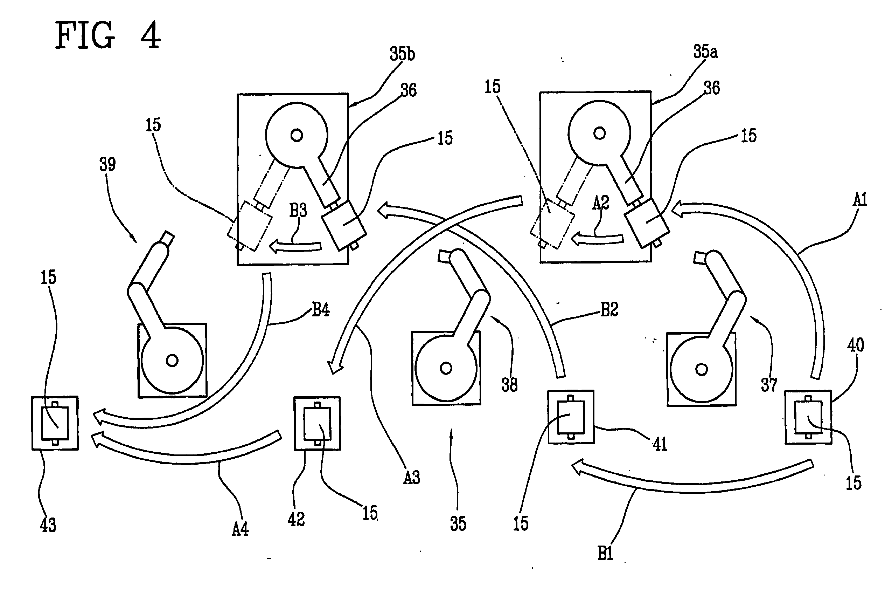

Fig. 4 diagrammatically shows an assembly 35 of "m" work stations (with m=2) or areas, belonging to the outer-sleeve building line 14.

The assembly shown consists of a first work station 35a and a second work station 35b intended for deposition of one or more belt layers 8a, 8b on a surface radially external to the auxiliary forming drums 15. Each belt layer 8a, 8b is preferably formed, through deposition heads known by themselves and therefore not illustrated, mounted on the work stations 35a, 35b, with respective strip-like elements laid down in circumferentially mutually approached relationship.

Each work station 35a, 35b comprises a support 36 designed to carry an auxiliary forming drum 15 and set it in rotation around the geometric axis "X-X" thereof. In the embodiment shown, each support 36 carries the auxiliary forming drum 15 in overhang and is movable in rotation between a loading position (shown in solid line), a work position (not shown) and an unloading position (shown in chain line).

The illustrated assembly further comprises a first robot arm 37, a second robot arm 38 and a third robot arm 39, a loading location 40, a first transit location 41, a second transit location 42 and an unloading location 43.

The first robot arm 37 is interposed between the loading location 40 and the first transit location 41 and is able to pick up an auxiliary forming drum 15 from the loading location 40 and bring it to support 36 of the first work station 35a or to the first transit location 41. The second robot arm 38 is interposed between the first transit location 41 and the second transit location 42 and is able to pick up an auxiliary forming drum 15 from support 36 of the first work station 35a and bring it to the second transit location 42 or to pick up an auxiliary forming drum 15 from the first transit location 41 and bring it to support 36 of the second work station 35b. The third robot arm 39 is interposed between the second transit location 42 and the unloading location 43 and is able to pick up an auxiliary forming drum 15 from the second transit location 42 or from support 36 of the second work station 35b and bring it to the unloading station 43.

In use, according to the method of the invention, a first auxiliary forming drum 15 coming from a portion of the outer-sleeve building line 14 placed upstream of the assembly consisting of the first and second work stations 35a, 35b, is positioned in the loading location 40 by devices not shown.

The first auxiliary forming drum 15 is picked up by the first robot arm 37 and positioned on support 36 of the first work station 35a when said support is in its loading position (arrow A1). Support 36 is brought to the work position where the respective deposition head, not shown, starts laying the strip-like elements in circumferentially mutually approached relationship.

A second auxiliary forming drum 15 is positioned in the loading location 40 left free by the first auxiliary forming drum 15.

The first robot arm 37 that meanwhile has left the first auxiliary drum 15 in said first work station 35a, picks up the second auxiliary forming drum 15 from the loading location 40 and positions it on the first transit location 41 (arrow B1). The second robot arm 38 picks up the second auxiliary forming drum 15 from the first transit location 41 and places it on support 36 of the second work station 35b when said support is in its loading position (arrow B2). Support 36 is brought to the work position where the respective deposition head, not shown, starts laying the strip-like elements in circumferentially mutually approached relationship.

When deposition of the strip-like elements in the first work station 35a has been completed, the respective support 36 rotates to the unloading position (arrow A2) where the first auxiliary forming drum 15 is picked up by the second robot arm 38 and brought to the second transit location 42 (arrow A3). At this point the third robot arm 39 picks up the first auxiliary forming drum 15 from the second transit location 42 and brings it to the unloading location 43 (arrow A4) where devices, not shown, pick it up and bring it to a portion of the outer-sleeve building line 14 placed downstream of the assembly 35 made up of the first and second work stations 35a, 35b.

While the deposition head of the second work station 35b is still laying down the strip-like elements, the first robot arm 37 picks up a third auxiliary forming drum 15 arrived at the loading station 40 and places it on support 36 of the first work station 35a.

Subsequently, when deposition of the strip-like elements in the second work station 35b has been completed, the respective support 36 rotates to the unloading position (arrow B3) where the second auxiliary forming drum 15 is picked up by the third robot arm 39 and brought to the unloading location 43 (arrow B4) where devices, not shown, pick it up and bring it to a portion of the outer-sleeve building line 14 placed downstream of the assembly 35 made up of the first and second work stations 35a, 35b.

At this point, a fourth auxiliary forming drum 15, arrived at the loading station 40, is brought, through the first robot arm 37, to the first transit station 41 and then, through the second robot arm 38, to the second work station 35b.

The cycle is repeated for all auxiliary forming drums 15 taken to the loading location 40 in succession.

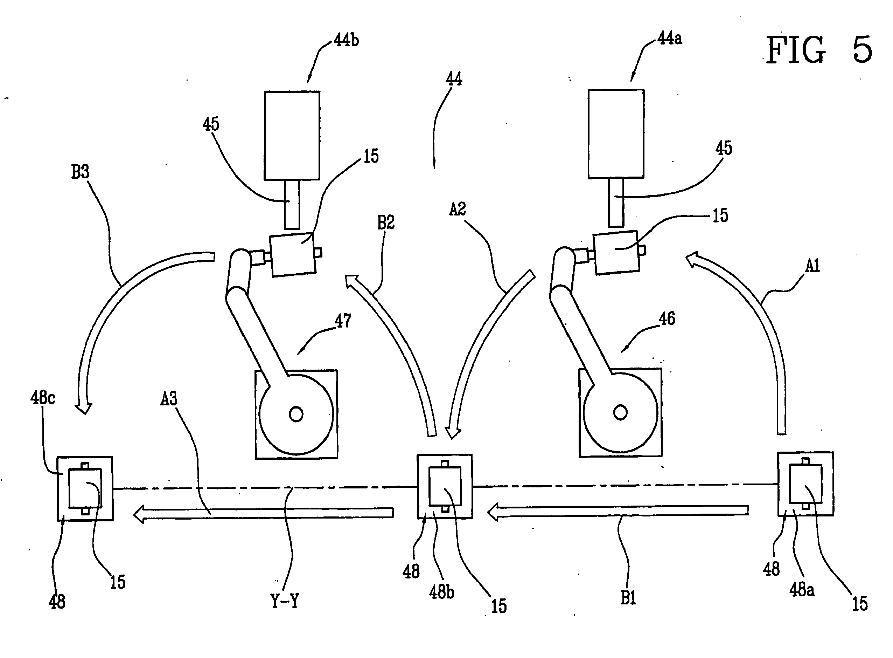

Fig. 5 diagrammatically shows a further assembly 44 of "m" work stations (with m=2) or areas, belonging to the outer-sleeve building line 14. The illustrated assembly 44 consists of a first work station 44a and a second work station 44b designed to lay the tread band 9 on a surface radially external to the auxiliary forming drums 15. The tread band 9 is made through application of an elongated element of elastomeric material wound up into coils disposed in side by side relationship and/or at least partly radially superposed around the auxiliary forming drum 15.

Each work station 44a, 44b comprises a feeding unit 45 for supplying said elongated element of elastomeric material.

The assembly 44 shown further comprises a first robot arm 46 and a second robot arm 47 and a trolley 48, movable along a path "Y-Y" disposed alongside the robot arms 46, 47, between a loading location 48a, a transit location 48b and an unloading location 48c. Each of the robot arms 46, 47 faces a respective work station 44a, 44b. The first robot arm 46 is positioned between the loading location 48a and the transit location 48b. The second robot arm 47 is positioned between the transit location 48b and the unloading location 48c.

In use, in accordance with the method of the invention, a first auxiliary forming drum 15, coming from a portion of the outer-sleeve building line 14 placed upstream of the assembly 44 made up of the first and second work stations 44a, 44b, is laid on trolley 48 positioned in the loading location 48a by devices not shown.

The first auxiliary forming drum 15 is picked up by the first robot arm 46 and brought in front of the feeding unit 45 of the first work station 44a (arrow A1). While the feeding unit 45 is supplying the elongated element, the first auxiliary forming drum 15 is supported and driven in rotation by the first robot arm 46 so as to determine winding of the elongated elements into coils.

A second auxiliary forming drum 15 is laid on trolley 48 positioned in the loading location 48a, trolley 48 is moved to the transit location 48b (arrow B1) where the second robot arm 47 picks it up and brings it in front of the feeding unit 45 of the second work station 44b (arrow B2). While the feeding unit 45 is supplying the elongated element, the second auxiliary forming drum 15 is supported and driven in rotation by the second robot arm 47 so as to determine winding of the elongated element into coils.

When deposition on the first auxiliary forming drum 15 has been completed, while the second auxiliary forming drum 15 is still working, the first robot arm 46 lays said first auxiliary forming drum 15 on trolley 48 which is still placed in the transit location 48b (arrow A2). Trolley 48 moves to the unloading location 48c (arrow A3) where suitable devices, not shown, pick up the first auxiliary forming drum 15 and bring it to a portion of the outer-sleeve building line 14 placed downstream of the assembly 44 made up of the first and second work stations 44a, 44b.

Trolley 48 goes back to the loading location 48a where it receives a third auxiliary forming drum 15 that is picked up by the first robot arm 46 and brought to the first work station 44a. Trolley 48 then moves to the unloading location 48c again.

When deposition on the second auxiliary forming drum 15 has been completed, while the third auxiliary forming drum 15 is working, the second robot arm 47 lays down said second auxiliary forming drum 15 on trolley 48 which is placed in the unloading location 48c (arrow B3). Devices not shown pick up the second auxiliary forming drum 15 and bring it to the portion of the outer-sleeve building line 14 placed downstream of the assembly 44 consisting of the first and second work stations 44a, 44b.

Trolley 48 goes back to the loading location 48a for receiving a fourth auxiliary forming drum 15 to be taken to the second work station 44b.

The cycle is repeated for all the auxiliary forming drums 15 brought in succession to the loading location 48a.

In the above illustrated example embodiments, each area or assembly 17, 35 and 44 of "m" work stations only comprises two work stations 17a, 17b; 35a, 35b; 44a, 44b (m=2). The loading location 33, 40 and 48a receives, and the unloading location 34, 43 and 48c releases a forming drum 13, 15 at each time interval corresponding to a cycle time "Tc"; consequently each of the two work stations 17a, 17b; 35a, 35b; 44a, 44b receives and releases a forming drum 13, 15 at each time interval corresponding to twice said cycle time "Tc". That is to say that each work station receives and releases a forming drum at each time interval equal to "m" times the cycle time "Tc".

In addition, deposition of the strip-like elements or the elongated element in the first work station 17a, 35a, 44a and deposition of the strip-like elements 18 or the elongated element in the second work station 17b, 35b, 44b partly takes place simultaneously with a phase displacement equal to said cycle time "Tc". More specifically, a deposition of an elementary semifinished product in a first work station and deposition of the same elementary semifinished product in an m-th work station of said assembly or area are out of phase by said cycle time Tc multiplied by "m-1".

The Applicant finally points out that, given an amount "Q" of material to be laid down on each forming drum, given a maximum deposition speed "Vdm" (material amount laid down in the time unit) for example bound to the physical features of the material and the necessary deposition accuracy, and given the cycle time "Tc", the minimum, useful necessary time "Tum" is calculated for laying such an amount "Q" as "Tum=Q/Vdm". The minimum total permanence time "Ttms" of each drum in a work station is the sum of "Tum+Tav+Tal", wherein "Tav" is the drum time for approaching the work station before deposition of the amount "Q", "Tal" is the drum time for moving-away after deposition of the amount "Q" and "Tum" is the aforesaid minimum useful necessary time for laying such an amount "Q". As the cycle time "Tc" is to be respected when entering and coming out of the assembly consisting of the "m" work stations, "m" is calculated as "Ttms/Tc" rounded off to the higher integer. Thus, as already mentioned before, the true total permanence time "Ttes" of each drum in each work station is given by the product "Tc x m" and each of the "m" work stations works out of phase by "Tc".

The true useful working time "Tue" in each work station is given by "Ttes-Tav-Tal" and is greater than the minimum useful necessary time "Tum". The true deposition speed "Vde" is given by "Q/Tue" and is slower than the maximum deposition speed "Vdm".

## Claims

1. A method of controlling the management of forming drums in building tyres for vehicle wheels, comprising:
- feeding "n" forming drums (13; 15) one after the other in a building line (12; 14) having a succession of work stations, for each time interval equal to one cycle time (Tc), said building line (12; 14) comprising:
- at least one assembly (17; 35; 44) of "m" work stations (17a, 17b; 35a, 35b; 44a, 44b) each adapted to form the same component of the tyre (2);
wherein "m" distinct forming drums (13; 15) are respectively brought to and moved apart from the different distinct "m" work stations (17a, 17b; 35a, 35b; 44a, 44b) of said assembly (17; 35; 44);
wherein each of said "m" work stations (17a, 17b; 35a, 35b; 44a, 44b) receives and releases a forming drum (13; 15) at each time interval equal to a multiple of "m" of said cycle time (Tc);
wherein "m" is greater than or equal to 2 and "n" is greater than or equal to "m".

2. A method as claimed in claim 1, comprising:
- picking up said "n" forming drums (13; 15) one after the other from the building line (12; 14) at each time interval equal to said cycle time (Tc).

3. A method as claimed in claim 1, wherein a deposition of an elementary semifinished product in a first work station (17a; 35a; 44a) and the deposition of the same elementary semifinished product in an m-th work station (17b; 35b; 44b) of said assembly (17; 35; 44) are out of phase by said cycle time (Tc) multiplied by "m-1".

4. A method as claimed in claim 1, wherein, given a minimum useful time "Tum" for the full deposition of an elementary semifinished product, given a moving-close time "Tav" of one of said "m" forming drums (13; 15) to one of said "m" work stations (17a, 17b; 35a, 35b; 44a, 44b), given a moving-apart time "Tal" of said forming drum (13; 15) from the aforesaid work station and given the cycle time "Tc", the "m" number of work stations (17a, 17b; 35a, 35b; 44a, 44b) is equal to the ratio "(Tum+Tav+Tal)/Tc" rounded off to the higher integer.

5. A method as claimed in claim 3 or 4, wherein the elementary semifinished products laid down in the "m" work stations (17a, 17b; 35a, 35b; 44a, 44b) are the same.

6. A method as claimed in claim 5, wherein each of the elementary semifinished products laid down in the "m" work stations (17a, 17b; 35a, 35b; 44a, 44b) comprises a plurality of strip-like elements (18) disposed in circumferential side by side relationship on the forming drum (13; 15), wherein in the respective work station (17a, 17b; 35a, 35b; 44a, 44b) the strip-like elements (18) are applied from bottom to top on the forming drum (13; 15).

7. A method as claimed in claim 1, wherein the forming drums (13; 15) are brought to the "m" work stations (17a, 17b; 35a, 35b; 44a, 44b) or moved away from the "m" work stations (17a, 17b; 35a, 35b; 44a, 44b) by at least one robot arm (31; 38; 47) and wherein during deposition of an elementary semifinished product, the forming drums (15) are supported by said at least one robot arm (46).

8. A method as claimed in claim 1, comprising:
- bringing the forming drums (13) in an alternated manner to a first work station (17a) or a second work station (17b) by means of one and the same robot arm (31).

9. A method as claimed in the preceding claim, wherein, while said robot arm (31) brings one of the forming drums (13) onto a support (19) of the first work station (17a) or onto a support (19) of the second work station (17b), an unloading device (28) mounted on board the work station (17a, 17b) receiving the forming drum (13) brought by said robot arm (31) moves away a forming drum (13) already present in said work station (17a, 17b).

10. A method as claimed in the preceding claim, comprising:
- picking-up the forming drums (13) in an alternated manner from the unloading device (28) of the first work station (17a) or from the unloading device (28) of the second work station (17b) through the one and the same robot arm (31).

11. A method as claimed in claim 1, comprising:
- bringing the forming drums (15) in an alternated manner to a first work station (35a) or a first transit location (41) through a first robot arm (37).

12. A method as claimed in the preceding claim, comprising:
- bringing the forming drums (15) in an alternated manner from the first transit location (41) to a second work station (35b) or from the first work station (35a) to a second transit location (42) through a second robot arm (38).

13. A method as claimed in the preceding claim, comprising:
- moving away the forming drums (15) in an alternated manner from the second transit location (42) or the second work station (35b) through a third robot arm (39).

14. A method as claimed in claim 1, comprising:
- bringing the forming drums (15) to a first work station (44a) or moving the forming drums (15) away from said first work station (44a) through a first robot arm (46).

15. A method as claimed in the preceding claim, comprising:
- laying on a trolley (48) the forming drums (15) moved away from the first work station (44a) through the first robot arm (46) and moving the trolley (48) away from said first robot arm (46).

16. A method as claimed in the preceding claim, comprising:
- bringing the forming drums (15) to a second work station (44b) or moving said forming drums (15) away from the second work station (44b) through a second robot arm (47).

17. A method as claimed in the preceding claim, comprising:
- moving a trolley (48) close to the second robot arm (47) and picking up from the trolley (48) the forming drum (15) to be brought to the second work station (44b) through said second robot arm (47).

18. A plant for production of tyres for vehicle wheels comprising:
- at least one building line (12;14) having a succession of work stations comprising at least one assembly (17, 35, 44) of "m" work stations (17a, 17b; 35a, 35b; 44a, 44b), each adapted to form the same component of the tyre (2);
- devices for feeding and picking up "n" forming drums, one at a time, to and from said building line (12; 14) at each time interval equal to a cycle time (Tc);
- transfer devices (31; 37, 38, 39, 41, 42; 46, 47, 48) for respectively bringing and moving apart "m" distinct forming drums (13; 15) to and from "m" distinct work stations (17a, 17b; 35a, 35b; 44a, 44b) of said assembly (17, 35, 44);
wherein each of said "m" work stations (17a, 17b; 35a, 35b; 44a, 44b) respectively receives and releases a forming drum (13, 15) at each time interval equal to a multiple of "m" of said cycle time (Tc);
wherein "m" is greater than or equal to 2 and "n" is greater than or equal to "m".

19. A plant as claimed in the preceding claim, wherein each work station (17a, 17b) comprises a support (19, 36) for supporting a forming drum (13) rotatably around its geometric axis (X-X), devices for setting the forming drum (13) in rotation around said geometric axis (X-X) and at least one deposition head (20) for laying strip-like elements (18), which head is operatively active on the forming drum (13).

20. A plant as claimed in claim 18, wherein each work station (44a, 44b) comprises at least one unit (45) for feeding a continuous elongated element of elastomeric material,
wherein the transfer devices (31; 37, 38, 39, 41, 42; 46, 47, 48) comprise as many robot arms (46, 47) as the work stations (44a, 44b) and each of said robot arms (46, 47) is operatively active on a respective work station (44a, 44b) and wherein the transfer devices (31; 37, 38, 39, 41, 42; 46, 47, 48) comprise at least one trolley (48) that is movable between the robot arms (46, 47).

21. A plant as claimed in claim 19, wherein said support (36) is movable between a work position close to the deposition head and an unloading position spaced apart from said deposition head.

22. A plant as claimed in the preceding claim, wherein the transfer devices (31; 37, 38, 39, 41, 42; 46, 47, 48) comprise as many robot arms (37, 38, 39) as the work stations (35a, 35b) plus one, and transit locations (41, 42) each interposed between a robot arm (37, 38, 39) and the following one.

23. A plant as claimed in claim 18, comprising two building lines (12, 14) : a carcass building line (12) and an outer-sleeve building line (14).

24. A plant as claimed in claim 23, wherein each of said two building lines (12, 14) comprises at least one of said assemblies of "m" work stations (17a, 17b; 35a, 35b; 44a, 44b).

25. A plant as claimed in claim 23, wherein said carcass building line (12) comprises one of said assemblies (17) of "m" work stations (17a, 17b) dedicated to building of at least one carcass ply (4).

## Patentansprüche

1. Verfahren zur Steuerung der Verwaltung von Formungstrommeln bei der Herstellung von Reifen für Fahrzeugräder, wobei das Verfahren folgende Schritte umfasst:
- Zuführen von "n" Formungstrommeln (13; 15) eine nach der anderen an eine Fertigungslinie (12; 14) mit einer Abfolge von Arbeitsstationen, für jedes Zeitintervall, das einer Taktzeit (Tc) entspricht, wobei die Fertigungslinie (12; 14) Folgendes umfasst:
- zumindest eine Anordnung (17; 35; 44) von "m" Arbeitsstationen (17a, 17b; 35a, 35b; 44a, 44b), die jeweils geeignet sind, dieselbe Komponente des Reifens (2) zu bilden;
wobei "m" verschiedene Formungstrommeln (13; 15) jeweils zu den unterschiedlichen verschiedenen "m" Arbeitsstationen (17a, 17b; 35a, 35b; 44a,
44b) der Anordnung (17; 35; 44) hingebracht und von diesen weg bewegt werden;
wobei jede der "m" Arbeitsstationen (17a, 17b; 35a, 35b; 44a, 44b) in jedem Zeitintervall, das einem Vielfachen von "m" der Taktzeit (Tc) entspricht, eine Formungstrommel (13; 15) aufnimmt und freigibt;
wobei "m" größer oder gleich 2 ist und "n" größer oder gleich "m" ist.

2. Verfahren nach Anspruch 1, das folgenden Schritt umfasst:
- Aufnehmen der "n" Formungstrommeln (13; 15) eine nach der anderen von der Fertigungslinie (12; 14) in jedem Zeitintervall, das einer Taktzeit (Tc) entspricht.

3. Verfahren nach Anspruch 1, wobei ein Ablegen eines halbfertigen Ausgangsprodukts in einer ersten Arbeitsstation (17a; 35a; 44a) und das Ablegen desselben halbfertigen Ausgangsprodukts in einer m-ten Arbeitsstation (17b; 35b; 44b) der Anordnung (17; 35; 44) um die Taktzeit (Tc) multipliziert mit "m-1" phasenverschoben sind.

4. Verfahren nach Anspruch 1, wobei bei einer gegebenen minimalen Nutzdauer "Tum" für das vollständige Ablegen eines halbfertigen Ausgangsprodukts, einer gegebenen Hinbewegungszeit "Tav" für eine der "m" Formungstrommeln (13; 15) zu einer der "m" Arbeitsstationen (17a, 17b; 35a, 35b; 44a, 44b), einer gegebenen Wegbewegungszeit "Tal" der Formungstrommeln (13; 15) von der Arbeitsstation und der gegebenen Taktzeit "Tc", die Anzahl "m" Arbeitsstationen (17a, 17b; 35a, 35b; 44a, 44b) gleich dem Verhältnis "(Tum+Tav+Tal) / Tc" gerundet auf die nächsthöhere ganze Zahl ist.

5. Verfahren nach Anspruch 3 oder 4, wobei die in den "m" Arbeitsstationen (17a, 17b; 35a, 35b; 44a, 44b) abgelegten halbfertigen Ausgangsprodukte dieselben sind.

6. Verfahren nach Anspruch 5, wobei jedes der in den "m" Arbeitsstationen (17a, 17b; 35a, 35b; 44a, 44b) abgelegten halbfertigen Ausgangsprodukte eine Vielzahl von streifenförmigen Elementen (18) umfasst, die in umlaufender Beziehung Seite an Seite an der Formungstrommel (13; 15) angeordnet sind, wobei in der jeweiligen Arbeitsstation (17a, 17b; 35a, 35b; 44a, 44b) die streifenförmigen Elemente (18) von unten nach oben an die Formungstrommel (13; 15) angelegt werden.

7. Verfahren nach Anspruch 1, wobei die Formungstrommeln (13; 15) durch zumindest einen Roboterarm (31; 38; 47) zu den "m" Arbeitsstationen (17a, 17b; 35a, 35b; 44a, 44b) hingebracht oder von den "m" Arbeitsstationen (17a, 17b; 35a, 35b; 44a, 44b) weg bewegt werden, und wobei während des Ablegens eines halbfertigen Ausgangsprodukts die Formungstrommeln (15) von dem zumindest einen Roboterarm (46) gehalten werden.

8. Verfahren nach Anspruch 1, das folgenden Schritt umfasst:
- Hinbringen der Formungstrommeln (13) mittels ein und desselben Roboterarms (31) in einer abwechselnden Art und Weise zu einer ersten Arbeitsstation (17a) oder einer zweiten Arbeitsstation (17b).

9. Verfahren nach dem vorhergehenden Anspruch, wobei eine an der Arbeitsstation (17a, 17b) montierte Entladevorrichtung (28), welche die von dem Roboterarm (31) gebrachte Formungstrommel (13) empfängt, eine bereits in der Arbeitsstation (17a, 17b) anwesende Formungstrommel (13) wegbewegt, während der Roboterarm (31) eine der Formungstrommeln (13) auf einen Träger (19) der ersten Arbeitsstation (17a) oder auf einen Träger (19) der zweiten Arbeitsstation (17b) bringt.

10. Verfahren nach dem vorhergehenden Anspruch, das folgenden Schritt umfasst:
- Aufnehmen der Formungstrommeln (13) in einer abwechselnden Art und Weise von der Entladevorrichtung (28) der ersten Arbeitsstation (17a) oder von der Entladevorrichtung (28) der zweiten Arbeitsstation (17b) durch ein und denselben Roboterarm (31).

11. Verfahren nach Anspruch 1, das folgenden Schritt umfasst:
- Hinbringen der Formungstrommeln (15) in einer abwechselnden Art und Weise zu einer ersten Arbeitsstation (35a) oder einer ersten Übergabestelle (41) durch einen ersten Roboterarm (37).

12. Verfahren nach dem vorhergehenden Anspruch, das folgenden Schritt umfasst:
- Hinbringen der Formungstrommeln (15) in einer abwechselnden Art und Weise von der ersten Übergabestelle (41) zu einer zweiten Arbeitsstation (35b) oder von der ersten Arbeitsstation (35a) zu einer zweiten Übergabestelle (42) durch einen zweiten Roboterarm (38).

13. Verfahren nach dem vorhergehenden Anspruch, das folgenden Schritt umfasst:
- Wegbewegen der Formungstrommeln (15) in einer abwechselnden Art und Weise von der zweiten Übergabestelle (42) oder der zweiten Arbeitsstation (35b) durch einen dritten Roboterarm (39).

14. Verfahren nach Anspruch 1, das folgenden Schritt umfasst:
- Hinbringen der Formungstrommeln (15) zu einer ersten Arbeitsstation (44a) oder Wegbewegen der Formungstrommeln (15) von der ersten Arbeitsstation (15) durch einen ersten Roboterarm (46).

15. Verfahren nach dem vorhergehenden Anspruch, das folgenden Schritt umfasst:
- Ablegen der durch den ersten Roboterarm (46) von der ersten Arbeitsstation (44a) wegbewegten Formungstrommeln (15) auf einem Transportwagen (48) und Wegbewegen des Transportwagens (48) von dem ersten Roboterarm (46).

16. Verfahren nach dem vorhergehenden Anspruch, das folgenden Schritt umfasst:
- Hinbringen der Formungstrommeln (15) zu einer zweiten Arbeitsstation (44b) oder Wegbewegen der Formungstrommeln (15) von der zweiten Arbeitsstation (44b) durch einen zweiten Roboterarm (47).

17. Verfahren nach dem vorhergehenden Anspruch, das folgenden Schritt umfasst:
- Bewegen eines Transportwagens (48) nahe an den zweiten Roboterarm (47) und Aufnehmen der zu der zweiten Arbeitsstation (44b) hinzubringenden Formungstrommeln (15) von dem Transportwagen (48) durch den zweiten Roboterarm (47).

18. Anlage zur Herstellung von Reifen für Fahrzeugräder, die Folgendes umfasst:
- zumindest eine Fertigungslinie (12; 14) mit einer Abfolge von Arbeitsstationen, die zumindest eine Anordnung (17, 35, 44) von "m" Arbeitsstationen (17a, 17b; 35a, 35b; 44a, 44b) umfassen, die jeweils geeignet sind, denselben Abschnitt einer Komponente des Reifens (2) zu bilden;
- Einrichtungen zum Zuführen und Abnehmen einer nach der anderen von "n" Formungstrommeln zu bzw. von der Fertigungslinie (12; 14) in jedem Zeitintervall, das einer Taktzeit (Tc) entspricht;
- Übergabeeinrichtungen (31; 37, 38, 39, 41, 42; 46, 47, 48) jeweils zum Hinbringen bzw. Wegbewegen "m" verschiedener Formungstrommeln (13; 15) zu bzw. von "m" verschiedenen Arbeitsstationen (17a, 17b; 35a, 35b; 44a, 44b) der Anordnung (17, 35, 44);
wobei jede der "m" Arbeitsstationen (17a, 17b; 35a, 35b; 44a, 44b) in jedem Zeitintervall, das einem Vielfachen von "m" der Taktzeit (Tc) entspricht, jeweils eine Formungstrommel (13; 15) aufnimmt und freigibt;
wobei "m" größer oder gleich 2 ist und "n" größer oder gleich "m".

19. Anlage nach dem vorhergehenden Anspruch, wobei jede Arbeitsstation (17a, 17b) einen Träger (19, 36) um eine Formungstrommel (13) um ihre geometrische Achse (X-X) drehbar zu tragen, Einrichtungen, um die Formungstrommel (13) in Drehung um die geometrische Achse (X-X) zu versetzen, sowie zumindest einen Ablegekopf (20) zum Auflegen von streifenförmigen Elementen (18) umfasst, wobei der Kopf im Betrieb auf die Formungstrommel (13) wirkt.

20. Anlage nach Anspruch 18, wobei jede Arbeitsstation (44a, 44b) zumindest eine Einheit (45) zum Zuführen eines durchgehenden länglichen Elements aus einem Elastomermaterial umfasst,
wobei die Übergabeeinrichtungen (31; 37, 38, 39, 41, 42; 46, 47, 48) gleich viele Roboterarme (46, 47) wie die Arbeitsstationen (44a, 44b) aufweisen und jeder der Roboterarme (46, 47) im Betrieb an einer jeweiligen Arbeitsstation (44a, 44b) aktiv ist, und wobei die Übergabeeinrichtungen (31; 37, 38, 39, 41, 42; 46, 47, 48) zumindest einen Transportwagen (48) umfassen, der zwischen den Roboterarmen (46, 47) bewegbar ist.

21. Anlage nach Anspruch 19, wobei der Träger (36) zwischen einer Arbeitsstellung nahe an dem Ablegekopf und einer Entladestellung, die von dem Ablegekopf beabstandet ist, bewegbar ist.

22. Anlage nach dem vorhergehenden Anspruch, wobei die Übergabeeinrichtungen (31; 37, 38, 39, 41, 42; 46, 47, 48) gleich viele Robotererarme (37, 38, 39) plus einen umfassen wie die Arbeitsstationen (35a, 35b), sowie Übergabestellen (41, 42), die jeweils zwischen einem Roboterarm (37, 38, 39) und dem folgenden angeordnet sind.

23. Anlage nach Anspruch 18, die zwei Fertigungslinien (12, 14) umfasst: eine Karkassen-Fertigungslinie (12) und eine Außenhüllen-Fertigungslinie (14).

24. Anlage nach Anspruch 23, wobei jede der zwei Fertigungslinien (12, 14) zumindest eine der Anordnungen von "m" Arbeitsstationen (17a, 17b; 35a, 35b; 44a, 44b) umfasst.

25. Anlage nach Anspruch 23, wobei die Karkassen-Fertigungslinie (12) eine der Anordnungen (17) von "m" Arbeitsstationen (17a, 17b) umfasst, die speziell zur Fertigung zumindest einer Karkassenlage (4) vorgesehen ist.

## Revendications

1. Procédé de commande de la gestion de tambours de formage dans la fabrication de pneus pour roues de véhicule, comprenant le fait :
- d'alimenter "n" tambours de formage (13 ; 15) l'un après l'autre dans une chaîne de fabrication (12 ; 14) ayant une succession de postes de travail, pour chaque intervalle de temps égal à un temps de cycle (Te), ladite chaîne de fabrication (12 ; 14), comprenant :
- au moins un ensemble (17 ; 35 ; 44) de "m" postes de travail (17a, 17b ; 35a, 35b ; 44a, 44b) chacun adapté pour former le même composant du pneu (2) ;
dans lequel "m" tambours de formage distincts (13 ; 15) sont respectivement amenés aux différents "m" postes de travail distincts (17a, 17b ; 35a, 35b ; 44a, 44b) dudit ensemble (17 ; 35 ; 44) et éloignés de ceux-ci ;
dans lequel chacun desdits "m" postes de travail (17a, 17b ; 35a, 35b ; 44a, 44b) reçoit et libère un tambour de formage (13 ; 15) à chaque intervalle de temps égal à un multiple de "m" dudit temps de cycle (Tc) ;
dans lequel "m" est supérieur ou égal à 2 et "n" est supérieur ou égal à "m".

2. Procédé tel que revendiqué dans la revendication 1, comprenant le fait :
- de ramasser lesdits "n" tambours de formage (13 ; 15) l'un après l'autre à partir de la chaîne de fabrication (12 ; 14) à chaque intervalle de temps égal audit temps de cycle (Tc).

3. Procédé tel que revendiqué dans la revendication 1, dans lequel un dépôt d'un produit semi-fini élémentaire dans un premier poste de travail (17a ; 35a ; 44a) et le dépôt du même produit semi-fini élémentaire dans un m^{ème} poste de travail (17b ; 35b ; 44b) dudit ensemble (17 ; 35 ; 44) sont décalés par ledit temps de cycle (Tc) multiplié par "m-1".

4. Procédé tel que revendiqué dans la revendication 1, dans lequel, compte tenu d'un temps utile minimal "Tum" pour le dépôt total d'un produit semi-fini élémentaire, compte tenu d'un temps de rapprochement "Tav" de l'un desdits "m" tambours de formage (13 ; 15) à l'un desdits "m" postes de travail (17a, 17b ; 35a, 35b ; 44a, 44b), compte tenu d'un temps d'éloignement "Tal" dudit tambour de formage (13 ; 15) du poste de travail précité et compte tenu du cycle de temps "Tc", le nombre "m" de postes de travail (17a, 17b ; 35a, 35b ; 44a, 44b) est égal au rapport "(Tum+Tav+Tal)/Tc" arrondi au nombre entier le plus grand.

5. Procédé tel que revendiqué dans la revendication 3 ou 4, dans lequel les produits semi-finis élémentaires prévus dans les "m" postes de travail (17a, 17b ; 35a, 35b ; 44a, 44b) sont les mêmes.

6. Procédé tel que revendiqué dans la revendication 5, dans lequel chacun des produits semi-finis élémentaires prévu dans les "m" postes de travail (17a, 17b ; 35a, 35b ; 44a, 44b) comprend une pluralité d'éléments en forme de bande (18) disposés côte à côte de manière circonférentielle sur le tambour de formage (13 ; 15), où dans le poste de travail respectif (17a, 17b ; 35a, 35b ; 44a, 44b) des éléments en forme de bande (18) sont appliqués de bas en haut sur le tambour de formage (13 ; 15).

7. Procédé tel que revendiqué dans la revendication 1, dans lequel les tambours de formage (13 ; 15) sont amenés aux "m" postes de travail (17a, 17b ; 35a, 35b ; 44a, 44b) ou éloignés des "m" postes de travail (17a, 17b ; 35a, 35b ; 44a, 44b) par au moins un bras de robot (31 ; 38 ; 47) et où pendant le dépôt d'un produit semi-fini élémentaire, les tambours de formage (15) sont supportés par ledit au moins un bras de robot (46).

8. Procédé tel que revendiqué dans la revendication 1, comprenant le fait :
- d'amener les tambours de formage (13) de manière alternée à un premier poste de travail (17a) ou à un deuxième poste de travail (17b) au moyen d'un seul et même bras de robot (31).

9. Procédé tel que revendiqué dans la revendication précédente, dans lequel, pendant que ledit bras de robot (31) amène l'un des tambours de formage (13) sur un support (19) du premier poste de travail (17a) ou sur un support (19) du deuxième poste de travail (17b), un dispositif de déchargement (28) monté à bord du poste de travail (17a, 17b) recevant le tambour de formage (13) amené par ledit bras de robot (31) s'éloigne d'un tambour de formage (13) déjà présent dans ledit poste de travail (17a, 17b).

10. Procédé tel que revendiqué dans la revendication précédente, comprenant le fait :
- de ramasser les tambours de formage (13) de manière alternée à partir du dispositif de déchargement (28) du premier poste de travail (17a) ou à partir du dispositif de déchargement (28) du deuxième poste de travail (17b) par l'intermédiaire du seul et même bras de robot (31).

11. Procédé tel que revendiqué dans la revendication 1, comprenant le fait :
- d'amener les tambours de formage (15) de manière alternée à un premier poste de travail (35a) ou à un premier emplacement de transport (41) par l'intermédiaire du seul et même bras de robot (31).

12. Procédé tel que revendiqué dans la revendication précédente, comprenant le fait :
- d'amener les tambours de formage (15) de manière alternée du premier emplacement de transport (41) à un deuxième poste de travail (35b) ou du premier poste de travail (35a) à un deuxième emplacement de transport (42) par l'intermédiaire d'un deuxième bras de robot (38).

13. Procédé tel que revendiqué dans la revendication précédente, comprenant le fait :
- d'éloigner les tambours de formage (15) de manière alternée du deuxième emplacement de transport (41) ou du deuxième poste de travail (35b) par l'intermédiaire d'un troisième bras de robot (39).

14. Procédé tel que revendiqué dans la revendication 1, comprenant le fait :
- d'amener les tambours de formage (15) à un premier poste de travail (44a) ou d'éloigner les tambours de formage (15) dudit premier poste de travail (44a) par l'intermédiaire d'un premier bras de robot (46).

15. Procédé tel que revendiqué dans la revendication précédente, comprenant le fait :
- de poser sur un chariot (48) les tambours de formage (15) éloignés du premier poste de travail (44a) par l'intermédiaire du premier bras de robot (46) et d'éloigner le chariot (48) dudit premier bras de robot (46).

16. Procédé tel que revendiqué dans la revendication précédente, comprenant le fait :
- d'amener les tambours de formage (15) à un deuxième poste de travail (44b) ou d'éloigner lesdits tambours de formage (15) du deuxième poste de travail (44b) par l'intermédiaire d'un deuxième bras de robot (47).

17. Procédé tel que revendiqué dans la revendication précédente, comprenant le fait :
- de déplacer un chariot (48) à proximité du deuxième bras de robot (47) et de ramasser à partir du chariot (48) les tambours de formage (15) à amener au deuxième poste de travail (44b) par l'intermédiaire dudit deuxième bras de robot (47).

18. Installation pour la production de pneus pour roues de véhicule, comprenant :
- au moins une chaîne de fabrication (12 ; 14) ayant une succession de postes de travail comprenant au moins un ensemble (17, 35, 44) de "m" postes de travail (17a, 17b ; 35a, 35b ; 44a, 44b), chacun adapté pour former le même composant du pneu (2) ;
- des dispositifs pour alimenter et ramasser "n" tambours de formage, un à la fois, à ladite ligne de construction (12 ; 14) et à partir de celle-ci, à chaque intervalle de temps égal à un temps de cycle (Tc) ;
- des dispositifs de transfert (31 ; 37, 38, 39, 41, 42 ; 46, 47, 48) pour amener et éloigner respectivement "m" tambours de formage distincts (13 ; 15) aux "m" postes de travail distincts (17a, 17b ; 35a, 35b ; 44a, 44b) et à partir de ceux-ci, dudit ensemble (17, 35, 44) ;
où chacun desdits "m" postes de travail (17a, 17b ; 35a, 35b ; 44a, 44b) reçoit et libère respectivement un tambour de formage (13, 15) à chaque intervalle de temps égal à un multiple de "m" dudit cycle de temps (Tc) ;
où "m" est supérieur ou égal à 2 et "n" est supérieur ou égal à "m".

19. Installation telle que revendiquée dans la revendication précédente, dans laquelle chaque poste de travail (17a, 17b) comprend un support (19, 36) pour supporter un tambour de formage (13) en rotation autour de son axe géométrique (X-X), des dispositifs pour mettre le tambour de formage (13) en rotation autour dudit axe géométrique (X-X) et au moins une tête de dépôt (20) pour poser des éléments en forme de bande (18), laquelle tête est active de manière fonctionnelle sur le tambour de formage (13).

20. Installation telle que revendiquée dans la revendication 18, dans laquelle chaque poste de travail (44a, 44b) comprend au moins une unité (45) pour alimenter un élément allongé continu de matériau élastomère,
où les dispositifs de transfert (31 ; 37, 38, 39, 41, 42 ; 46, 47, 48) comprennent autant de bras de robot (46, 47) que les postes de travail (44a, 44b) et chacun desdits bras de robot (46, 47) est actif de manière fonctionnelle sur un poste de travail respectif (44a, 44b) et où les dispositifs de transfert (31 ; 37, 38, 39, 41, 42 ; 46, 47, 48) comprennent au moins un chariot (48) qui est mobile entre les bras de robot (46, 47).

21. Installation telle que revendiquée dans la revendication 19, dans laquelle ledit support (36) est mobile entre une position de travail à proximité de la tête de dépôt et une position de déchargement écartée de ladite tête de dépôt.

22. Installation telle que revendiquée dans la revendication précédente, dans laquelle les dispositifs de transfert (31 ; 37, 38, 39, 41, 42 ; 46, 47, 48) comprennent autant de bras de robot (37, 38, 39) que les postes de travail (35a, 35b) plus un, et des emplacements de transport (41, 42) chacun interposé entre un bras de robot (37, 38, 39) et le bras suivant.

23. Installation telle que revendiquée dans la revendication 18, comprenant deux chaînes de fabrication (12, 14) : une chaîne de fabrication de carcasse (12) et une chaîne de fabrication de manche extérieure (14).

24. Installation telle que revendiquée dans la revendication 23, dans laquelle chacune desdites deux chaînes de fabrication (12, 14) comprend au moins l'un desdits ensembles de "m" postes de travail (17a, 17b ; 35a, 35b ; 44a, 44b).

25. Installation telle que revendiquée dans la revendication 23, dans laquelle ladite chaîne de fabrication de carcasse (12) comprend l'un desdits ensembles (17) de "m" postes de travail (17a, 17b) dédié à la fabrication d'au moins un pli de carcasse (4).
